Europäisches Patentamt

European Patent Office

Office européen des brevets

(19)

(11) Numéro de publication: **0 270 051 B1**

(12) **FASCICULE DE BREVET EUROPEEN**

(45) Date de publication de fascicule du brevet:
18.09.91

(21) Numéro de dépôt: 87117671.5

(22) Date de dépôt: 30.11.87

(51) Int. Cl.⁵: **B01D 63/06**, B01D 71/02

(54) **Procédé d'assemblage d'un module d'éléments séparateurs à support céramique et module obtenu par ce procédé.**

(30) Priorité: 03.12.86 FR 8616932

(43) Date de publication de la demande:
08.06.88 Bulletin 88/23

(45) Mention de la délivrance du brevet:
18.09.91 Bulletin 91/38

(84) Etats contractants désignés:
BE CH DE ES FR GB IT LI NL SE

(56) Documents cités:
EP-A- 0 154 295
GB-A- 431 863
GB-A- 2 047 400

(73) Titulaire: **SOCIETE DES CERAMIQUES TECH-
NIQUES**

**65460 Bazet(FR)**

(72) Inventeur: **Garcera, Daniel**
**2bis Boulevard de l'Abattoir**
**F-65000 Tarbes(FR)**
Inventeur: **Gillot, Jacques**
**5 impasse de la Hount**
**Odod F-65310 Laloubere(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne un procédé d'assemblage d'un module d'éléments séparateurs à support céramique, ces éléments étant disposés parallèlement entre eux avec leurs extrémités fixées respectivement dans deux plaques par l'intermédiare de joints polymériques souples.

Par éléments séparateurs on désigne ici soit des éléments céramiques poreux permettant d'effectuer une séparation par un effet de tamisage à travers des pores de dimension déterminée, c'est-à-dire une filtration, soit des éléments céramiques poreux, portant sur leur surface une membrane semi-perméable constituée d'un matériau polymérique, ou autre, permettant d'effectuer des séparations par des procédés tels que l'osmose inverse, la pervaporation ou tout autre procédé à membrane de ce type.

On utilise plus précisément des éléments séparateurs de géométrie tubulaire ou quasi-tubulaire, en particulier de géométrie du type multicanal, telle qu'elle est décrite dans les publications suivantes :
- J. GILLOT et D. GARCERA - "Nouveaux Media Filtrants Céramiques pour Microfiltration Tangentielle et Ultrafiltration" - Conférence FILTRA 84 Sté Française de filtration Oct. 1984 PARIS.
- J. GILLOT - G. BRINKMAN - D. GARCERA - "New Ceramic Filter Media for Crossflow Microfiltration and Ultrafiltration". Fourth World Filtration Congress 22-24 april 1984 - Ostende - Belguim.

Un module de filtration fonctionnant suivant le mode de filtration tangentielle comprend schématiquement :
- des éléments séparateurs montés en parallèle,
- deux plaques d'extrémité sur lesquelles les éléments séparateurs sont fixés au moyen de joints souples,
- un carter extérieur cylindrique sur lequel sont fixées les plaques d'extrémité.

La distance entre les plaques d'extrémité (longueur des éléments séparateurs) est en général beaucoup plus grande que le diamètre extérieur de ces plaques.

On réalise ainsi un montage tel qu'il délimite d'une part une cavité dans laquelle circule le liquide à filtrer ou rétentat (côté extérieur des plaques d'extrémité et intérieur des tubes ou des canaux des éléments multicanaux), d'autre part une cavité dans laquelle on recueille le perméat (espace compris à la fois entre les deux plaques d'extrémité, à l'extérieur des éléments séparateurs et à l'intérieur du carter), ces deux cavités ne devant communiquer que par passage à travers la membrane.

Les joints d'assemblage des éléments séparateurs avec les plaques d'extrémité doivent donc assurer deux fonctions principales :
- maintenir mécaniquement les éléments séparateurs,
- assurer l'étanchéité entre les cavités du liquide à filtrer et du perméat,
et plusieurs fonctions accessoires :
- encaisser par leur élasticité les différences de dilatation entre les éléments séparateurs et le carter du module,
- contribuer à amortir les vibrations des éléments séparateurs.

Par les brevets GB-A-431 863 et GB-A-2 047 400 relatifs aux échangeurs de chaleur, on connaît des joints en matériau élastique et en forme de tronc de cône, disposés autour de tubes cylindriques et serrés entre deux plaques d'extrémité.

Dans le domaine des modules séparateurs à support céramique précités, une difficulté supplémentaire que présente la réalisation d'un tel assemblage provient du fait qu'il est très difficile - sinon impossible - d'usiner une céramique poreuse sans provoquer l'apparition de fissures qui dégradent fortement ses propriétés mécaniques, et qu'au cas où l'usinage est possible, il est toujours extrêmement coûteux. En ceci, les céramiques diffèrent profondément d'autres matériaux, tels que les métaux pour lesquels ces difficultés ne se présentent pas.

N'ayant pas été usinés, les éléments filtrants en céramique n'ont pas une forme absolument régulière, en raison de déformations et des retraits subis lors de leur mise en forme par extrusion ou pressage, de leur séchage et de leur frittage. Par exemple la forme réelle d'un élément tubulaire en principe cylindrique diffère en général du cylindre idéal sur plusieurs points :
- l'axe de l'élément n'est pas exactement une droite (défaut de flèche ou crosse),
- la section de l'élément n'est pas un cercle parfait, mais une courbe approximativement elliptique,
- les dimensions et l'orientation des axes principaux de cette ellipse ne sont pas constantes le long du tube et varient d'un tube à l'autre.

Par ailleurs, l'extrémité de l'élément séparateur peut être recouverte d'une couche d'un matériau tel qu'un émail, dont la fonction est d'empêcher le passage du liquide de la cavité du rétentat à la cavité du perméat à travers la porosité grossière du support. Cet émail recouvre alors la face d'extrémité de l'élément séparateur et une portion de sa surface latérale en créant une surépaisseur locale plus ou moins régulière.

Ces imperfections de forme, bien que de faible ampleur et parfois imperceptibles à l'oeil nu, rendent néanmoins impraticable l'assemblage des éléments céramiques dans une plaque d'extrémité rigide comportant des logements de dimensions bien calibrées, au moyen de joints polymériques préformés ayant une forme et des dimensions précises. En effet, l'utilisation de tels joints présenterait les inconvénients suivants :

- l'apparition de fuites si les dimensions transversales de l'élément céramique sont trop petites ou de forme trop irrégulière,
- l'impossibilité de montage des éléments dont les dimensions transverses sont trop grands,
- l'apparition de contraintes très élevées, pouvant aller jusqu'à la rupture de l'élément céramique si, après le montage, on veut mettre le joint en compression par serrage pour assurer une étanchéité rigoureuse.

Un des moyens connus pour résoudre ce problème est de réaliser l'assemblage au moyen d'un joint constitué d'un caoutchouc silicone qui est d'abord coulé in situ sous forme liquide, de manière à s'adapter à la forme irrégulière des éléments céramiques, puis polymérisé pour lui conférer sa forme définitive, puis mis en compression par serrage entre deux plaques métalliques.

Ce type d'assemblage remplit parfaitement les fonctions d'étanchéité, de maintien en place des éléments céramiques, d'absorption des dilatations différentielles entre la céramique et le carter. Il est cependant d'un emploi limité, car les compositions d'élastomères qui peuvent être mis en forme ainsi par coulage sans pression ne permettent pas de couvrir l'ensemble des besoins sous l'angle de la résistance aux liquides corrosifs ou aux solvants.

En effet, pour être d'un emploi général, ce type de filtre dit pouvoir permettre la filtration ou la séparation de fluides corrosifs (bases, acides, oxydants, etc...) ou organiques à caractère solvant (hydrocarbures ou autres) ainsi que l'utilisation de tels fluides pour nettoyer la membrane séparatrice.

Les limitations des joints coulés in situ apparaissent dans le cas des caoutchoucs silicones qui résistent bien aux acides, aux bases et aux oxydants, mais qui, en présence de solvants organiques, subissent un fort gonflement avec altération des caractéristiques mécaniques qui les rendent alors inutilisables comme matériau de joint.

La présente invention a pour but d'éviter ces inconvénients et de mettre en oeuvre un procédé d'assemblage permettant l'utilisation d'une grande variété de compositions pour les matériaux des joints.

La présente invention a pour objet un procédé d'assemblage d'un module d' éléments séparateurs à support céramique sensiblement tubulaires, disposés parallèlement entre eux, les extrémités de chaque élément étant fixées respectivement avec des joints intermédiaires souples dans des ouvertures calibrées pratiquées dans deux plaques d'extrémités solidarisées à un carter de protection, caractérisé par le fait que :

- on réalise tout d'abord par moulage des ébauches de joints en élastomère résistant aux liquides corrosifs et aux solvants organiques, ayant une dureté SHORE A comprise entre 30 et 95 et un allongement élastique supérieur à 10 %, chaque ébauche présentant une surface externe quelconque et une cavité interne dont la surface correspond à la forme externe idéale d'un élément filtrant, mais avec des dimensions légèrement inférieures,
- on monte lesdites ébauches sur les extrémités desdits éléments filtrants,
- on usine la surface externe desdites ébauches en leur donnant une forme de révolution par rapport à un axe commun coincidant approximativement avec l'axe dudit élément, de manière à les adapter à la forme desdites ouvertures calibrées desdites plaques d'extrémité, et obtenir ainsi lesdits joints,
- on réalise le montage desdits éléments dans le carter entre lesdites plaques de manière à maintenir lesdits joints en compression entre lesdits éléments et lesdites plaques.

Le choix du procédé d'usinage, par exemple meulage, tournage ou fusion locale, selon les élastomères utilisés, permet d'aboutir à une surface suffisamment lisse et régulière pour donner par la suite une bonne étanchéité.

Selon un premier mode de réalisation, ladite ébauche est usinée en tronc de cône ouvert vers l'intérieur dudit carter, avec un épaulement venant en butée contre la base extrême dudit élément filtrant correspondant.

Selon un autre mode de réalisation chaque joint est mis en compression par serrage entre ladite plaque d'extrémité qui lui est associée et une plaque parallèle à cette dernière solidaire du carter.

Selon un autre mode de réalisation, ladite plaque d'extrémité et ladite plaque parallèle possèdent des ouvertures en tronc de cône se faisant face et ladite ébauche est usinée de manière à comporter deux troncs de cônes correspondants avec un cylindre intermédiaire.

Dans ce cas, ladite ébauche peut être également usinée pour que ledit cylindre ait un diamètre extérieur plus grand que le plus grand diamètre de troncs de cône et qu'il possède des bases annulaires

EP 0 270 051 B1

d'appui sur les deux plaques qui l'enserrent.

Selon un autre mode de réalisation ladite plaque d'extrémité et ladite plaque parallèle possèdent des ouvertures en forme de calotte sphérique et ladite ébauche est usinée de manière à comporter deux calottes sphériques correspondantes.

Bien entendu le choix de la forme est dicté par le désir de diminuer les volumes morts et l'encombrement dans le module.

La présente invention a également pour objet un module d'éléments filtrants obtenu par le procédé selon l'invention.

D'autres caractéristiques et avantages de la présente invention apparaîtront au cours de la description suivante de modes de réalisation donnés à titre illustratif mais nullement limitatif.

Dans le dessin annexé :
- La figure 1 est une vue schématique en élévation partiellement coupée d'un module d'éléments de séparation assemblés selon un procédé de l'art antérieur.
- La figure 2 est une vue schématique en coupe montrant plus précisément un joint de l'art antérieur appartenant au module de la figure 1.
- La figure 3 montre en élévation le défaut de flèche ou de crosse d'un élément séparateur en céramique pouvant appartenir à un module selon l'invention.
- La figure 4 montre en coupe transversale un défaut de cylindricité d'un élément séparateur en céramique pouvant appartenir à un module selon l'invention.
- Les figures 5A et 5B montrent respectivement en élévation et en vue transversale un autre défaut d'un élément séparateur en céramique.
- Les figures 6A, 6B, 6C montrent schématiquement en coupe trois variantes d'extrémité d'un élément séparateur en céramique dans un assemblage obtenu par le procédé selon l'invention.
- Les figures 7, 8 et 9 montrent schématiquement en coupe d'autres modes de mise en oeuvre du procédé selon l'invention.
- La figure 10 montre en coupe partielle un module selon l'invention.
- Les figures 11A et 11B montrent en coupe partielle agrandie un premier exemple de joint associé à ses plaques de serrage selon l'invention, comme dans la figure 6C.
- Les figures 12A et 12B montrent un second exemple de joint associé à ses plaques de serrage selon l'invention, comme dans la figure 8.
- Les figures 13A et 13B montrent un troisième exemple de joint associé à ses plaques de serrage selon l'invention, dans un montage analogue à celui de la figure 9.
- Les figures 14A et 14B montrent un quatrième exemple de joint associé à sa plaque de serrage selon l'invention, comme dans la figure 7.

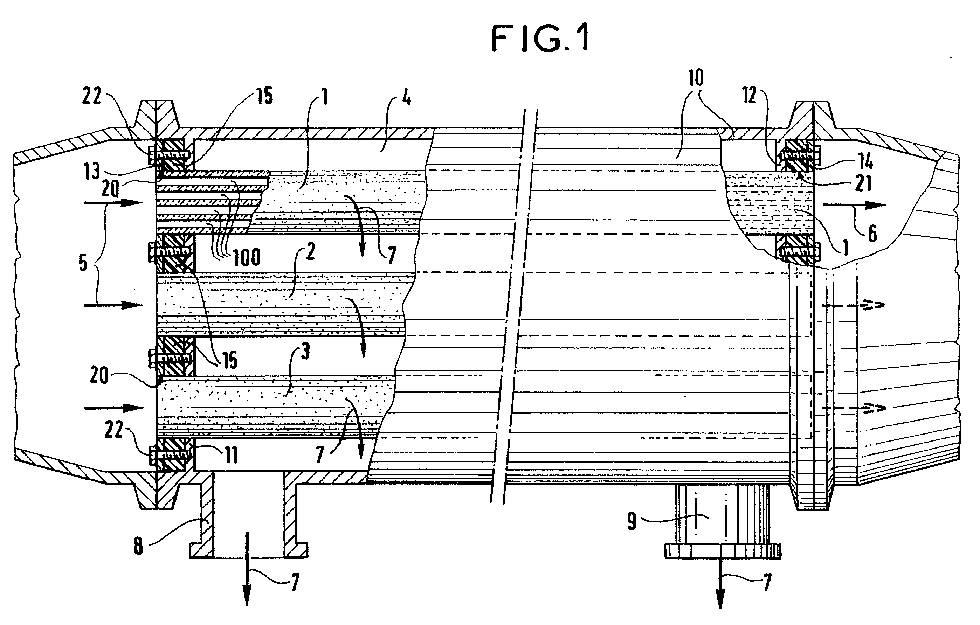

On a illustré très schématiquement dans la figure 1 trois éléments séparateurs 1, 2, 3, multicanaux d'un module de l'art antérieur. Chaque élément est constitué par un bloc de céramique oblong, de section transversale sensiblement hexagonale, et percé d'une pluralité de canaux parallèles 100. Ces éléments séparateurs 1, 2, 3 sont logés dans un carter métallique 10, dont les parois extrêmes 11 et 12 sont traversées par les éléments 1, 2, 3. L'étanchéité à ce niveau est assurée par la mise en oeuvre de plaques métalliques d'extrémités 13 et 14 présentant des ouvertures 20 et 21 et munies de joints 15 interposés, l'ensemble étant fixé par des vis schématisées en 22.

Le liquide à filtrer schématisé par les flèches 5 rentre par les ouvertures 20 de la plaque 13, circule à l'intérieur des canaux 100 des éléments 1, 2, 3, et ressort par les ouvertures 21 de la plaque 14. (flèches 6). Le perméat (flèches 7) circule dans l'espace 4 défini per l'intérieur du carter, l'extérieur des éléments séparateurs 1, 2, 3 et est évacué au niveau des sorties 8 et 9.

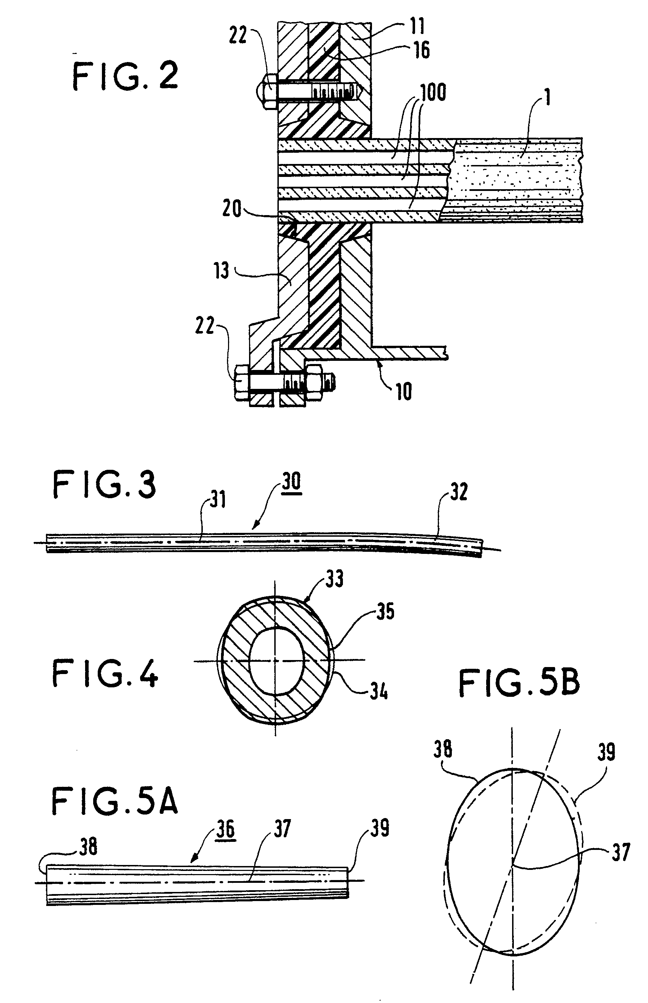

On a montré dans la figure 2 un mode de réalisation connu des joints 15 de la figure 1. Les éléments multicanaux, tels que l'élément 1, étant mis en place dans le carter 10 et les ouvertures 20 des plaques d'extrémité telles que la plaque 13, on coule in situ un joint 16 en caoutchouc silicone qui se polymérise puis est mis en compression par serrage des vis 22. Ce joint ne résiste pas aux solvants organiques et il n'existe pas d'autres élastomères coulables susceptibles de résoudre le problème posé.

Les figures 3 à 5 montrent différents défauts géométriques que peuvent présenter les éléments séparateurs en céramique et qui compliquent leur assemblage en module.

Ainsi dans la figure 3, on voit un élément 30 dont l'axe 31 s'écarte de la droite idéale vers son extrémité 32 : il présente un défaut de flèche ou de crosse.

Dans la figure 4, on voit un élément 33 dont le contour de la section transversale n'est pas un cercle parfait 34, mais un ovale 35.

Enfin dans la figure 5A, on montre un élément 36 d'axe 37 présentant une section transversale ellipsoïdale variable d'une extrémité 38 à l'extrémité 39, plus visibles dans la figure 5B : il s'agit d'un défaut

4

de conicité associé à un défaut d'ovalisation.

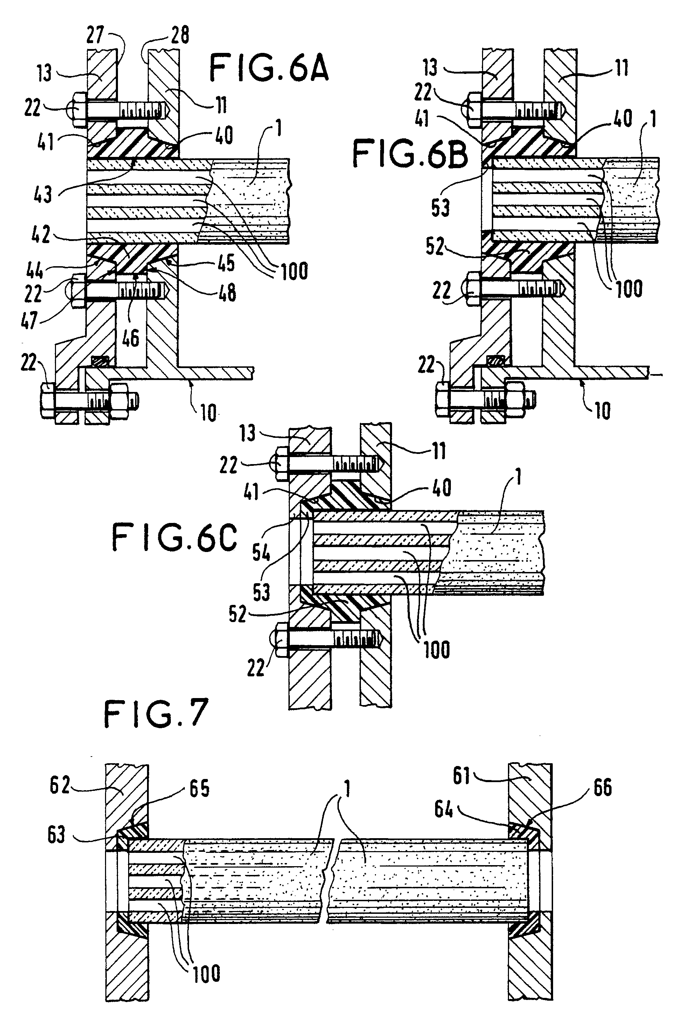

La figure 6A illustre un assemblage réalisé par le procédé selon l'invention ; on a conservé l'élément séparateur 1, la plaque 11 du carter 10 présentant un logement 40, la plaque extrême 13 présentant un logement 41, ainsi que les vis 22.

Les parois des logements 40 et 41 sont usinées en troncs de cône dont les dimensions sont bien calibrées.

Selon l'invention, on réalise par moulage sous pression, par injection ou par tout autre procédé classique de mise en forme d'élastomère, une ébauche de joint en un matériau élastomère choisi pour sa résistance aux fluides corrosifs et aux solvants organiques ; cet élastomère doit avoir un allongement élastique supérieur à 10 %, une dureté Shore A comprise entre 30 et 95.

La surface 43 de la cavité intérieure de l'ébauche correspond à la surface idéale externe d'un élément 1 (cylindre de section circulaire, hexagonale, etc... selon l'élément 1 considéré), mais avec des dimensions très légèrement inférieures, par exemple avec un diamètre plus petit de 0,2 à 0,6 mm. La surface extérieure de l'ébauche est quelconque, par exemple cylindrique.

On met en place l'ébauche sur l'extrémité imparfaite de l'élément 1 par un léger étirage de l'élastomère. Du fait de son élasticité, l'ébauche enserre parfaitement cette extrémité et on a une bonne étanchéité entre cette ébauche et l'élément séparateur 1. Par contre, les défauts géométriques de la surface extérieure de l'élément 1 se reportent sur la forme extérieure de l'ébauche qui ne peut bien entendu coïncider avec les troncs de cône des logements 40 et 41. On modifie alors cette forme extérieure par usinage, meulage, tournage, fusion locale, découpe au laser ou par jet de liquide à haute pression, ou tout autre procédé adapté, de manière à donner à la surface de l'ébauche des formes géométriques bien définies correspondant à celles des logements 40 et 41. Pour le meulage, on peut mettre en oeuvre à titre d'exemple des meules au carbure de silicium présentant une vitesse périphérique de 5 à 40 mètres par seconde.

On réalise ainsi un joint 42 avec deux troncs de cône 44 et 45 et un cylindre intermédiaire 46 dont le diamètre est supérieur au plus grand diamètre des cônes, et qui présente des bases annulaires 47 et 48. Ces dernières viennent s'appuyer respectivement sur les faces 27 et 28 des plaques 13 et 11. Au moment du serrage par les vis 22, le joint souple 42 est mis en compression et s'applique parfaitement à la fois contre les logements coniques des plaques 13 et 11 et contre l'élément séparateur 1.

Dans le cas de la figure 6A, la surface des logements 40 et 41 dans les plaques aux deux extrémités de l'élément est une surface de révolution autour d'un axe commun ; on peut effectuer la mise en forme de la surface extérieure des deux ébauches en mettant en rotation l'élément qui les porte autour d'un axe coïncidant approximativement avec l'axe de l'élément, et en usinant simultanément ces deux surfaces extérieures. On obtient ainsi des surfaces extérieures de révolution.

Si cela est nécessaire pour l'assemblage dans les plaques d'extrémité, on démonte les joints après la mise en forme, en repérant exactement l'orientation de chaque joint par rapport à l'extrémité de l'élément séparateur à laquelle il correspond, et on effectue ensuite le montage des éléments et des joints dans les plaques d'extrémité, en replaçant exactement chaque joint sur l'extrémité de l'élément à laquelle il correspond, en respectant son orientation.

On obtient ainsi un faisceau d'éléments séparateurs montés entre deux plaques d'extrémité au moyen de joints élastiques dont la surface intérieure moule parfaitement l'extrémité des éléments malgré leur irrégularité de forme et dont la surface extérieure s'adapte exactement à la forme des logements des plaques d'extrémité.

Dans la variante de mise en oeuvre illustrée dans la figure 6B, le joint 52 comporte en outre un épaulement terminal 53 venant s'appliquer contre la face extrême de l'élément séparateur 1 et qui sert de butée.

Dans la variante de mise en oeuvre illustrée dans la figure 6C, l'épaulement 53 du joint de la figure 6B vient en appui contre un épaulement correspondant 54 appartenant à la plaque 13 et faisant suite au tronc de cône 41. Une telle variante permet un très bon maintien en place de l'élément séparateur 1.

Dans la variante montrée dans la figure 7, on n'utilise plus à chaque extrémité des éléments séparateurs des plaques doubles et un dispositif de serrage de ces plaques qui met le joint en compression, mais des plaques d'extrémités simples 61 et 62 et un dispositif de serrage qui met simultanément deux joints 63 et 64 en compression Chacun de ces joints a la forme extérieure d'un tronc de cône avec un épaulement terminal venant en butée contre l'extrémité de l'élément séparateur 1. Les troncs de cône ont été usinés pour s'adapter au mieux à la forme des logements 65 et 66 prévus dans les plaques 61 et 62.

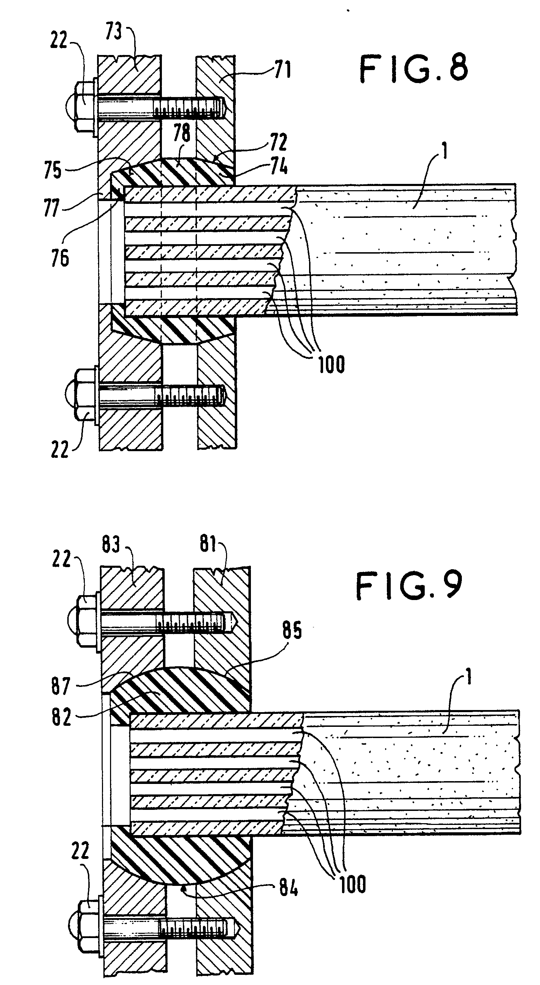

Dans la variante illustrée dans la figure 8, on revient à une disposition à deux plaques 71 et 73 fixées par des vis 22, comme dans la figure 6C.

Le joint 72 possède après usinage deux troncs de cônes 74 et 75 et un épaulement 76 venant en butée contre un épaulement 77 de la plaque 73 et contre l'extrémité de l'élément 1 ; une partie cylindrique 78 comprise entre les deux troncs de cône 74 et 75 ne possède pas de faces d'appui contre les plaques 71 et 73, comme le joint 52 de la figure 6C.

Dans la variante illustrée dans las figure 9, le joint 82 compris entre les plaques 81 et 83 possède une surface extérieure 84 usinée en calotte sphérique adaptée aux logements 85 et 87 respectivement prévus dans les plaques.

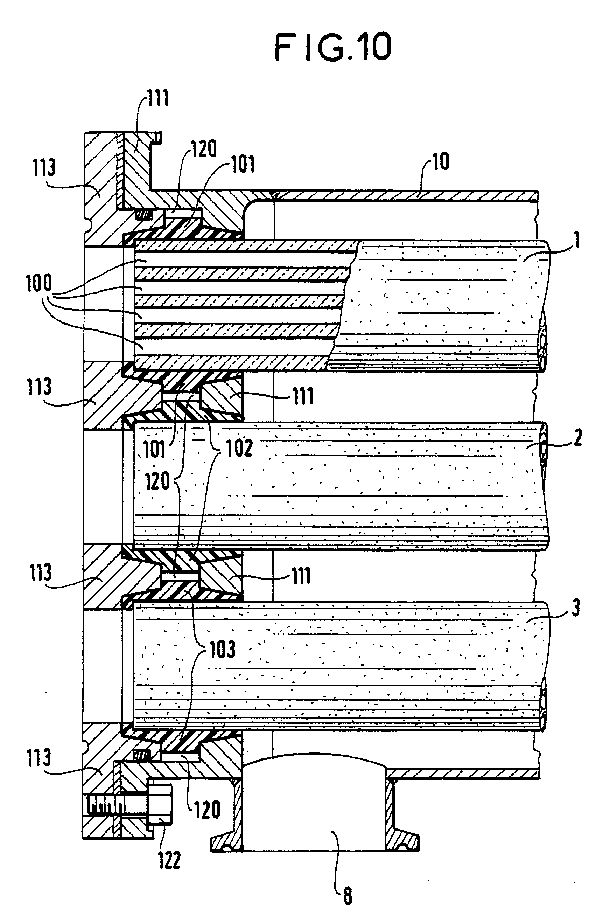

On a illustré partiellement dans la figure 10, un module selon l'invention dont on voit trois éléments séparateurs 1, 2, 3, le carter 10 avec sa face extrême 111 coopérant avec une plaque d'extrémité 113. Des joints 101, 102, 103, analogues au joint 52 de la figure 6C enfilés respectivement sur les éléments séparateurs 1, 2, 3 assurent l'étanchéité entre chaque élément et la plaque 111 et entre chaque élément et la plaque 113 fixée à la plaque 111 par des vis 122.

Ce module de séparation présente les avantages suivants :

- Les joints 101, 102, 103 sont maintenus en compression et assurent à la fois une très bonne étanchéité et un très bon maintien en place des éléments séparateurs 1 2, 3, et cela avec une très bonne durabilité des joints puisqu'il sont en compression.
- Les joints sont démontables, ce qui permet en cas de besoin de changer aisément un seul élément séparateur (ce n'est pas le cas dans la disposition de la figure 2).
- Dans toute la région de l'extrémité du module, aussi bien du côté du rétentat que du perméat, il n'existe pas de recoin de petite dimension difficile à nettoyer où des micro-organismes puissent se développer de façon incontrôlée : le module est utilisable pour filtrer des produits tels que de aliments.
- Le cavités du fluide à traiter et du perméat sont séparées par un espace vide commun 120 situé à chaque extrémité, à la fois entre les deux plaques 111 et 113 et entre les joints polymériques. Cet espace vide peut communiquer avec l'extérieur du module, ce qui présente les avantages suivants :
  . Au cas où un des joints viendrait à fuir, le liquide s'écoulerait d'une cavité vers l'extérieur et non dans l'autre cavité.
  . Cet espace vide 120 peut être utilisé pour stériliser l'extrémité du module par introduction de vapeur d'eau à une température supérieure à 100°C, ce qui est un moyen très performant.
  . En cas d'augmentation de température, les joints polymériques qui ont un coefficient de dilatation supérieur à celui de la céramique et à celui du métal, peuvent se dilater dans l'espace vide 120 entre les deux plaques, sans que cette dilatation provoque l'apparition de contraintes élevées, comme c'est le cas avec un joint polymérique coulé de l'art antérieur remplissant tout l'espace entre les deux plaques.

On va donner ci-dessous quelques exemples d'applications pratiques du procédé selon l'invention.

Exemple n° I

On réalise des éléments filtrants en alumine poreuse ayant la forme d'un multicanal, tel que décrit dans les publications précitées avec 19 canaux d'un diamètre intérieur de 4 mm, dont la forme extérieure est un prisme hexagonal régulier ayant une distance entre faces planes opposées d'environ 29 mm et une longueur totale de 850 mm. Les arêtes du prisme hexagonal ne forment pas un angle vif : les faces latérales de ce prisme se raccordent l'une à l'autre au moyen d'une surface cylindrique de rayon 4,2 mm. La surface des canaux est revêtue d'une couche d'alumine d'un diamètre de pores de 0,2 μm.

On veut réaliser le module de la figure 10 avec 19 de ces éléments, qui présentent les imperfections de forme suivantes :

  . La distance entre les faces opposées du prisme hexagonal, au niveau des extrémités des éléments, varie entre 28 et 30 mm.
  . L'une des extrémités des multicanaux n'est pas parfaitement rectiligne mais légèrement courbée (défaut de crosse de la figure 3). A cette extrémité, l'angle que forme l'axe du prisme hexagonal avec l'axe moyen déterminé sur l'ensemble de la longueur de l'élément varie entre 1 et 2°, suivant les éléments.

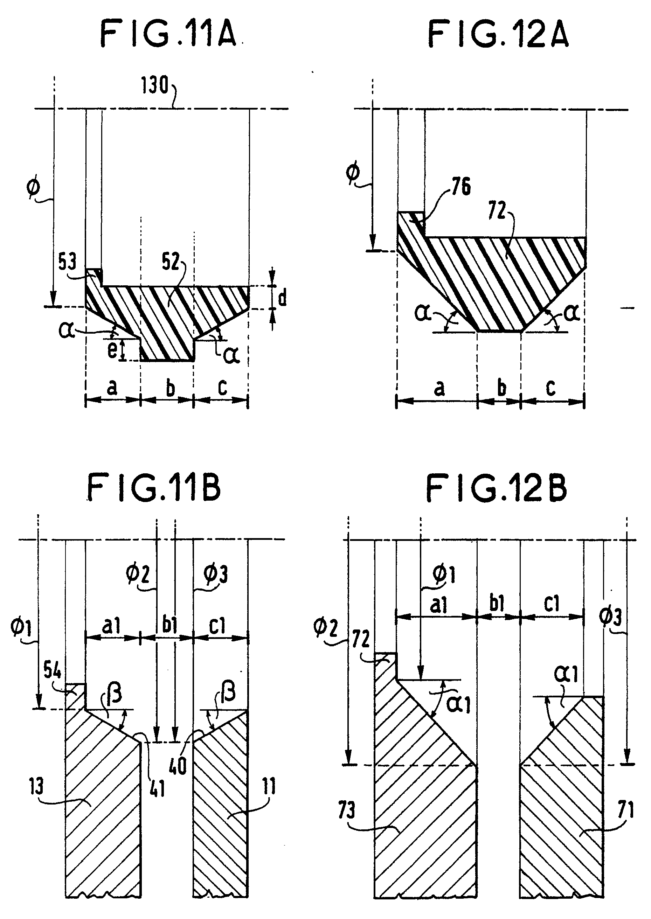

On veut effectuer un assemblage conforme à celui qui est montré à la figure 6C ; on a illustré plus en détail le joint 52 de la figure 6C dans la figure 11A et les logements 40 et 41 des plaques 13 et 11 dans la figure 11B.

L'ébauche du joint 52 est obtenue par moulage d'un élastomère fluoré de marque VITON (fabriqué par DU PONT DE NEMOURS) d'une dureté SHORE A de 60. La surface de sa cavité intérieur est un prisme hexagonal régulier ayant une distance entre plats de 27,5 mm et un rayon de raccordement cylindrique entre faces de 4 mm ; sa surface extérieure est un cylindre de diamètre extérieur 50 mm ; sa longueur est de 30 mm. A une extrémité un épaulement 53 de profil rectangulaire déborde vers l'intérieur.

On place une de ces ébauches sur chacune des extrémités des 19 éléments.

On met successivement chaque élément en rotation autour d'un axe voisin de son axe moyen 130, à une vitesse de 2 tours/seconde.

On usine par meulage la surface extérieure de l'ébauche jusqu'à l'obtention de la forme du joint 52, telle qu'elle apparaît dans la figure 11A.

L'angle des cônes $\alpha$ peut être compris entre 3° et 60°, et de préférence compris entre 5° et 20°.

a, b, c sont respectivement les dimensions, mesurées parallèlement à l'axe 130, du cône voisin de la plaque 13, de la hauteur du cylindre intermédiaire et du cône voisin de la plaque 11 ; e est la hauteur de la face d'appui du cylindre intermédiaire sur les plaques d'extrémités ; d est la plus petite épaisseur du joint ; $\emptyset$ est le plus petit diamètre des cônes.

a, b, c, d, e répondent à la définition générale :

$$0,5 < \frac{a+b+c}{\emptyset} < 2$$
$$0,05\,\emptyset < d < 0,3\,\emptyset$$
$$0,1\,\emptyset < e < 0,4\,\emptyset$$

Le rapport de chacune des dimensions a, b, c avec une autre est compris entre 1/3 et 3.

Dans l'exemple précis :

$\alpha = 10°$

$a = b = c = 10$ mm

$e = 4$ mm

$\emptyset = 36$ mm

On monte les éléments séparateurs munis de leurs joints 52 dans les ouvertures des plaques 11 et 13 présentant les dimensions suivantes :

$a1 = b1 = c1 = 10$ mm

$\beta = 10°$

$\emptyset 2 = \emptyset 3$

$\emptyset 1 = 36$ mm

L'étanchéité est assurée en serrant les deux plaques 11 et 13 à l'aide des vis 22 pour que l'intervalle b1 soit ramené à 8 mm. Ceci comprime le joint que se déforme en raison de son élasticité et assure une très bonne étanchéité jusqu'à une pression d'au moins 100 bars appliquée d'un côte ou de l'autre des plaques d'extrémité.

EXEMPLE II

On réalise des éléments tubulaires en alumine poreuse d'un diamètre intérieur d'environ 15 mm, d'un diamètre extérieur d'environ 19 mm, et d'une longueur de 750 mm, dont la surface intérieure est revêtue d'une couche microporeuse à diamètre de pores 40 Angströms, tels que décrits dans les publications précitées.

On veut réaliser le montage en module de ces tubes qui présentent les imperfections de forme suivantes :

. Le périmètre extérieur de la section de chaque extrémité est voisin d'une ellipse presque circulaire (défaut d'ovalisation, cf figure 5B) dont les grands axes sont ;
- à une extrémité A :18,3 mm et 18,9 mm
- à l'autre extrémité B :18,7 mm et 19,7 mm

. Le diamètre extérieur moyen est donc de 18,6 mm à l'extrémité A et 19,2 mm à l'extrémité B (défaut de conicité, cf figure 5a).

Pour réaliser le montage selon l'invention :
- On réalise par un procédé conventionnel de moulage des ébauches de joints en caoutchouc nitrile de dureté 30 SHORE A et ayant la forme suivante
  . Surface intérieure cylindrique de diamètre 18 mm.
  . Surface extérieure cylindrique de diamètre 60 mm.
  . Longueur totale 35 mm.
  . A une extrémité, un épaulement 76 de profil rectangulaire déborde vers l'intérieur.
- On place une de ces ébauches sur chacune des extrémités de chaque tube.

EP 0 270 051 B1

- On met le tube en rotation autour d'un axe voisin de son axe moyen à une vitesse de 3 tours/seconde.
- On usine la surface extérieure des deux ébauches de manière à obtenir un joint 72 ayant une forme telle que celle qui apparaît dans la figure 8 et la figure 12A, avec les dimensions suivantes :

a = 15 mm
b = 8 mm
c = 12 mm
$\alpha = 45°$
$\varnothing = 26$ mm

On utilise pour cela une meule en carbure de silicium à structure poreuse, à liant vitreux, et d'un grain 45 (norme AFNOR NF X 11.501)

- On repère la position angulaire du joint 72 de l'extrémité A par rapport à une génératrice du tube et on le démonte.
- On monte le tube dans une carter métallique au moyen de plaques d'extrémité conformément à la figure 8.

On utilise des plaques 71 et 73 comportant des logements dont les formes apparaissent dans la figure 12B avec les dimensions suivantes :

a1 = 15 mm
c1 = 12 mm
$\alpha 1 = 47°$
$\varnothing 1 = 26$ mm
$\varnothing 2 - \varnothing 3$

- On met le tube en place en enfilant d'abord son extrémité A dans les logements des plaques d'extrémité internes, puis on met en place la plaque d'extrémité externe de l'extrémité B, puis le joint de l'extrémité A en l'enfilant sur le tube dans la position repérée précédemment, puis la plaque extérieure de l'extrémité A.
- On effectue ensuite le serrage comme dans l'exemple I pour que b1 soit inférieur à b.

EXEMPLE III

On réalise des éléments filtrants en alumine poreuse ayant la forme d'un multicanal à 19 canaux semblable à celui de l'exemple I, mais dont le diamètre des canaux est de 6 mm et la forme extérieure est un prisme hexagonal régulier ayant une distance entre surfaces planes opposées d'environ 38 mm et un rayon de raccordement cylindrique entre faces de 6,3 mm. La surface intérieure des canaux est revêtue d'une couche d'alumine poreuse d'un diamètre de 3 µm. La longueur de l'élément est 850 mm.

On veut réaliser le montage en module de 12 de ces éléments qui présentent les imperfections de forme suivantes :
. La distance entre les faces opposées du prisme hexagonal, au niveau des extrémités des éléments, varie entre 37 et 39 mm.
. A certaines extrémités, l'hexagone est légèrement aplati, c'est-à-dire que ses angles au sommet sont compris entre 59 et 62°.

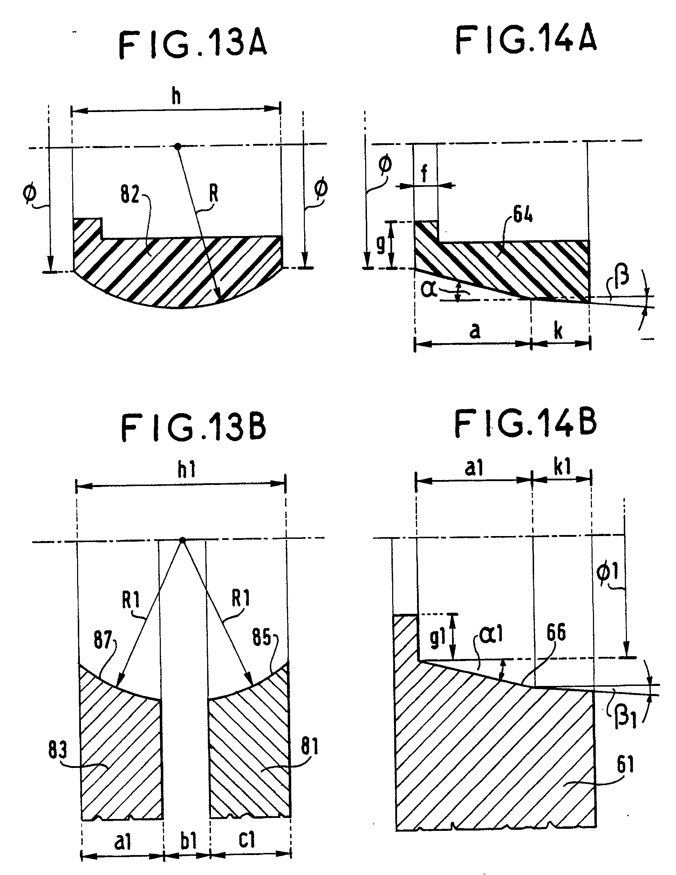

Pour effectuer ce montage :
- On réalise par un procédé de moulage des ébauches de joints en caoutchouc EPDM (Ethylène - Propylène - Diène - Monomère) d'une dureté SHORE A de 80 et qui ont la forme suivante :
. la surface intérieure est un prisme hexagonal avec une distance entre faces planes opposées de 36,5 mm et un rayon de raccordement cylindrique entre faces de 6 mm,
. la surface extérieure est un cylindre d'une diamètre de 70 mm,
. la longeur totale h est de 38,5 mm.
- On place une de ces ébauches sur chacune des extrémités des 12 éléments.
- On met successivement chaque élément en rotation autour d'un axe voisin de son axe moyen, à une vitesse de 2000 tours/minute.
- On usine le joint par tournage de manière à obtenir un joint 82 dont la forme apparaît dans la figure 13A ; la partie du joint qui viendra en contact avec les plaques d'extrémité a la forme d'une sphère de rayon R = 30 mm.

Le diamètre $\varnothing$ vaut 46 mm.
- On effectue le montage dans le carter comme indiqué dans l'exemple I, en utilisant des plaques d'extrémité 81 et 83 apparaissant dans les figures 9 et 13B.

Les logements 85 et 87 présentent les dimensions suivantes :

8

a1 = 15 mm
b1 = 8,5 mm
c1 = 15 mm
R1 = 30 mm
h1 = 38,5 mm

Toutefois, on réalise l'étanchéité par collage du joint : au montage, on enduit la surface intérieure et la surface extérieure du joint d'une colle époxy. Après montage et polymérisation de la colle on obtient un joint étanche à 10 bars. Si au montage les surfaces du joint et les logements de plaques no sont pas exactement en regard, on rapproche très légèrement les plaques (en diminuant la dimension b1) avant la polymérisation de la colle.

EXEMPLE IV

- On veut monter un module de 7 éléments séparateurs décrits dans l'exemple I avec des joints 73, 64 comprimés axialement comme illustré dans la figure 7.
- On réalise pour cela des ébauches de joints en caoutchouc néoprène de dureté SHORE A = 70, dont la surface intérieure est un prisme hexagonal régulier ayant une distance entre plats de 27,5 mm, un rayon de raccordement cylindrique entre faces de 4 mm, et dont la surface extérieure est un cylindre de diamètre 52 mm, et de longueur 30 mm.
- On usine par meulage la surface extérieure de ces ébauches comme dans l'exemple I, pour obtenir un joint 64 dont la forme apparaît dans la figure 14A avec les dimensions suivantes :

  $a = 20$ mm
  $k = 10$ mm
  $g = 8$ mm
  $f = 4$ mm
  $\emptyset = 42$ mm
  $\alpha = 15°$ $\qquad \beta = 3°$

- On monte ensuite les éléments dans un carter métallique au moyen de plaques d'extrémité 61 comportant des logements 66 tels qu'ils apparaissent dans la figure 14B avec les dimensions suivantes :

  $a1 = 20$ mm
  $k1 = 10$ mm
  $g1 = 8$ mm
  $\emptyset 1 = 42$ mm
  $\alpha 1 = 14°$ $\qquad \beta 1 = 3°$

Il n'y a qu'une plaque par extrémité. Pour obtenir l'étanchéité, on rapproche les plaques d'extrémité 61, 62 l'une de l'autre d'une distance de 2 mm à partir de la position où elles affleurent juste la face d'extrémité des joints. Ceci comprime les joints contre les plaques et contre les éléments céramiques et réalise donc l'étanchéité.

Bien entendu l'invention n'est pas limitée aux exemples qui viennent d'être décrits en détail. On pourra, sans sortir du cadre de l'invention, modifier notamment la forme des joints, celle des logements associés, et les moyens assurant la mise en compression de ces joints.

**Revendications**

1. Procédé d'assemblage d'un module d'éléments séparateurs à support céramique sensiblement tubulaires, disposés parallèlement entre eux, les extrémités de chaque élément étant fixées respectivement avec des joints intermédiaires souples dans des ouvertures calibrées pratiquées dans deux plaques d'extrémités solidarisées à un carter de protection, caractérisé par le fait que :
   - on réalise tout d'abord par moulage des ébauches de joints en élastomère résistant aux liquides corrosifs et aux solvants organiques, ayant une dureté SHORE A comprise entre 30 et 95 et un allongement élastique supérieur à 10 %, chaque ébauche présentant une surface externe quelconque et une cavité interne dont la surface (43) correspond à la forme externe idéale d'un élément filtrant (1), mais avec des dimensions légèrement inférieures,
   - on monte lesdites ébauches sur les extrémités desdits éléments filtrants (1),
   - on usine la surface externe desdites ébauches en leur donnant une forme de révolution par rapport à un axe commun coincidant approximativement avec l'axe dudit élément, de manière à les adapter à la forme desdites ouvertures calibrées 40, 41) desdites plaques d'extrémité (11, 13), et obtenir ainsi lesdits joints (42),
- on réalise le montage desdits éléments (1) dans le carter (10) entre lesdites plaques de manière à maintenir lesdits joints (42) en compression entre lesdits éléments (1) et lesdites plaques (11, 13).

2. Procédé selon la revendication 1, caractérisé par le fait que ladite ébauche est usinée en tronc de cône ouvert vers l'intérieur dudit carter, avec un épaulement (53) venant en butée contre la base extrême dudit élément filtrant (1) correspondant.

3. Procédé selon la revendication 1, caractérisé par le fait que chaque joint (42, 52) est mis en compression par serrage entre ladite plaque d'extrémité (13) qui lui est associée et une plaque (11) parallèle à cette dernière solidaire du carter (10).

4. Procédé selon la revendication 3, caractérisé par le fait que ladite plaque d'extrémité (13) et ladite plaque parallèle (11) possèdent des ouvertures (41, 40) en tronc de cône se faisant face et que ladite ébauche est usinée de manière à comporter deux troncs de cône (44, 45) correspondants avec un cylindre (46) intermédiaire.

5. Procédé selon la revendication 4, caractérisé par le fait que ladite ébauche est usinée pour que ledit cylindre (46) ait un diamètre extérieur plus grand que le plus grand diamètre de troncs de cône et qu'il possède des bases annulaires d'appui (47, 48) sur les deux plaques (13, 11) qui l'enserrent.

6. Procédé selon la revendication 3, caractérisé par le fait que ladite plaque d'extrémité (83) et ladite plaque parallèle (81) possèdent des ouvertures (85, 87) en forme de calotte sphérique et que ladite ébauche est usinée de manière à comporter deux calottes sphériques correspondantes.

7. Procédé selon l'une des revendications précédentes, caractérisé par le fait que l'usinage de ladite ébauche est réalisé par meulage, tournage, fusion locale découpe au laser ou par jet de liquide à haute pression.

8. Module d'éléments séparateurs (1, 2, 3) , caractérisé par le fait qu'il est obtenu par le procédé selon l'une des revendications précédentes.

9. Module d'éléments séparateurs obtenu par le procédé selon la revendication 4, caractérisé par le fait que ledit joint (101, 102, 103) possède un premier tronc de cône de hauteur a, et de demi-angle au sommet $\alpha$, un cylindre intermédiaire de hauteur b, un second tronc de cône de hauteur, c de demi-angle au sommet $\alpha$, et de plus petit diamètre externe $\emptyset$, le rapport de chacune de ces dimensions a, b, c avec une autre étant compris entre 1/3 et 3 avec :

$$3° < \alpha < 60° \quad \text{et} \quad 0,5 < \frac{a+b+c}{\emptyset} < 2.$$

10. Module d'éléments séparateurs selon la revendication 9, caractérisé par le fait que ledit cylindre intermédiare (46) possède un épaulement annulaire d'épaisseur e avec $0,1\emptyset < e < 0,4\emptyset$.

11. Module d'éléments séparateur selon l'une des revendications 8 à 10, caractérisé en ce que le plus petit diamètre externe dudit joint étant référencé $\emptyset$ et sa plus petite épaisseur étant référencée d, on a $0,05\emptyset < d < 0,3\emptyset$.

12. Module d'éléments séparateurs selon l'une des revendications 8 et 11, caractérisé par le fait que les dimensions transversales desdits joints (101, 102, 103) sont telles qu'il existe entre ces joints à chaque extrémité du carter une zone vide (120) aisément stérilisable par introduction de vapeur d'eau.

## Claims

1. A method of assembling a module of separator elements having substantially tubular ceramic supports

EP 0 270 051 B1

disposed parallel to each other, with the ends of each element being fixed via intermediary flexible seals in openings in two end plates attached to a protective casing, the method being characterized in that

- firstly seal blanks are molded from an elastomer material that resists to corrosive liquids and to organic solvents and has a Shore A hardness between 30 and 95 and an elastic elongation range in excess of 10%, each blank having an outside surface of any shape and an internal cavity whose surface (43) corresponds to the ideal external shape of a filtering element (1), but has slightly smaller dimensions,
- said blanks are fitted onto the ends of said filtering elements (1),
- the outside surfaces of said blanks are machined to provide them with a shape of revolution relative to a common axis which coincides approximately with the axis of said element, so as to adapt the blanks to the shape of said calibrated openings (40, 41) in said end plates (11, 13), and to obtain thereby said seals (42), and
- said elements (1) are mounted in said casing (10) between said plates, such as to hold said seals (42) in compression between said elements (1) and said plates (11, 13).

2. A method according to claim 1, characterized in that said blank is machined to a truncated cone open towards the interior of said casing, and is provided with a shoulder (53) adapted to abut against the bottom end of said corresponding filtering element (1).

3. A method according to claim 1, characterized in that each seal (42, 52) is subjected to compression by clamping it between the associated end plate (13) and a plate (11) parallel to said end plate and attached to said casing (10).

4. A method according to claim 3, characterized in that said end plate (13) and said plate (11) parallel thereto present frustoconical openings (41, 40) facing towards each other, and that said blank is machined to form two corresponding truncated cones (44, 45) with a cylinder (46) therebetween.

5. A method according to claim 4, characterized in that said blank is machined such that the cylinder (46) has an outside diameter larger than the largest diameter of said truncated cones, and that it comprises annular bearing faces (47, 48) applied against the two plates (13, 11) between which is is clamped.

6. A method according to claim 3, characterized in that said end plate (83) and said plate (81) parallel thereto have part-spherical openings (85, 87), and that said blank is machined to form two part-spherical ends corresponding thereto.

7. A method according to claim 1, characterized in that machining of said blank is effected by grinding, turning, localized melting, laser cutting or else high-pressure liquid jet cutting.

8. A module of separator elements (1, 2, 3), characterized in that it is obtained by means of the method in accordance with one of the preceding claims.

9. A module of separator elements obtained by means of the method according to claim 4, characterized in that said seal (101, 102, 103) presents a first truncated cone having a height $a$ and a half-angle $\propto$ at the summit, an intermediate cylinder having a height $b$ , and a second truncated cone having a height $c$, a half-angle $\propto$ at the summit and a smaller outer diameter $\emptyset$, with the ratio between each of the dimensions a, b, c being comprised, between 1/3 and 3, wherein: $3^{\circ}<\propto60^{\circ}$ and $0,5<(a+b+c)/\emptyset<2$.

10. A module of separator elements according to claim 9, characterized in that said intermediate cylinder (46) comprises an annular shoulder of thickness $e$ wherein $0,1\emptyset<e<0,4\emptyset$.

11. A module of separator elements according to any one of claims 8 to 10, characterized in that with the smaller outside diameter of the seal being referenced $\emptyset$ and the smaller thickness being referenced $d$, the following formula applies: $0,05\emptyset<d<0,3\emptyset$.

12. A module of separator elements according to any one of claims 8 to 11, characterized in that the transverse dimensions of said seals (101, 102, 103) are such that there results between them at each end of said casing an empty space (120) readily sterilizable by injecting steam.

11

**Patentansprüche**

1. Verfahren zum Zusammenbau eines Separatorelementemoduls, dessen Elemente auf im wesentlichen rohrformigen keramischen Trägern aufgebracht sind, die parallel zueinander angeordnet sind, wobei die Enden jedes Elements jeweils mit nachgiebigen Zwischendichtungen in kalibrierten Öffnung befestigt sind, welche in zwei an einem Schutzgehäuse befestigten Endplatten eingearbeitet sind, dadurch gekennzeichnet, daß

   - man zuerst durch Gießen Dichtungsrohlinge aus einem gegen die korrosiven Flüssigkeiten und organischen Lösungsmittel beständigen Elastomer mit einer SHORE A-Härte zwischen 30 und 95 und einer über 10% liegenden elastischen Dehnbarkeit herstellt, wobei jeder Rohling eine beliebige Außenoberfläche und einen inneren Hohlraum aufweist, dessen Oberfläche (43) der idealen Außenform eines Filterelements (1) entspricht, jedoch geringfügig kleinere Abmessungen besitzt,
   - man montiert die Rohlinge auf die Enden der Filterelemente (1),
   - man bearbeitet die Außenoberfläche der Rohlinge in der Weise, daß man ihnen eine rotationssymmetrische Form um eine gemeinsame Achse erteilt, die annähernd mit der Achse des Elements zusammenfällt, derart, daß die Rohlinge an die Form der kalibrierten Öffnungen (40, 4) der Endplatten (11, 13) angepaßt und so die genannten Dichtungen (42) erhalten werden, und
   - man führt die Montage der Elemente (1) im Gehäuse zwischen den Endplatten durch, derart, daß die Dichtungen (42) zwischen den Elementen (1) und den Endplatten (11, 13) komprimiert gehalten werden.

2. Verfahren nach Anspruch 1, dadurch gekennzeichnet, daß der Rohling zu einem zum Inneren des Gehäuses hin offenen Kegelstumpf mit einer Schulter (53) verarbeitet wird, mit einer Schulter (53), die an der Basis des entsprechenden Filterelements (1) anliegt.

3. Verfahren nach Anspruch 1, dadurch gekennzeichnet, daß jede Dichtung (42, 52) durch Einspannen zwischen der ihr zugeordneten Endplatte (13) und einer Platte (11) komprimiert wird, die parallel zur Endplatte liegt und mit dem Gehäuse fest verbunden ist.

4. Verfahren nach Anspruch 3, dadurch gekennzeichnet, daß die Endplatte (13) und die parallele Platte (11) kegelstumpfförmige, einander gegenüberliegende Öffnungen (41, 40) aufweisen, und daß der Rohling so bearbeitet wird, daß er zwei korrespondierende Kegelstümpfe (44, 45) mit einem dazwischenliegenden Zylinder (46) aufweist.

5. Verfahren nach Anspruch 4, dadurch gekennzeichnet, daß der Rohling derart bearbeitet wird, daß der Zylinder (46) einen größeren Außendurchmesser als den größten Durchmesser der Kegelstümpfe erhält, und daß er ringförmige Sitzflächen (47, 48) zum Aufliegen auf den ihn einspannenden beiden Platten (13, 11) besitzt.

6. Verfahren nach Anspruch 3, dadurch gekennzeichnet, daß die Endplatte (83) und die parallele Platte (81) Öffnungen (85, 87) in Form von Kugelkalotten besitzen, und daß der Rohling so bearbeitet wird, daß er zwei dementsprechende Kugelkalotten aufweist.

7. Verfahren nach einem der vorhergehenden Ansprüche, dadurch gekennzeichnet, daß die Bearbeitung des Rohlings durch Schleifen, Abdrehen, örtliches Schmelzen, Abspanen durch Laser oder Hochdruck-Flüssigkeitsstrahl erfolgt.

8. Modul von Trennelementen (1, 2, 3), dadurch gekennzeichnet, daß er durch das Verfahren nach einem der vorhergehenden Ansprüche erhalten wird.

9. Trennelementenmodul, der gemäß dem Verfahren nach Anspruch 4 hergestellt ist, dadurch gekennzeichnet, daß die Dichtung (101, 102, 103) einen ersten Kegelstumpf mit der Höhe a und einem Halbwinkel $\propto$ an der Spitze, einen Zwischenzylinder mit der Höhe b und einen zweiten Kegelstumpf mit der Höhe c, einem Halbwinkel $\propto$ an der Spitze und einem kleineren Außendurchmesser $\emptyset$ besitzt, wobei das Verhältnis jeder der Abmessungen a, b, c zur anderen zwischen 1/3 und 3 liegt, und gilt: $3°<\propto<60°$ und $0,5<(a+b+c)/\emptyset<2$.

10. Trennelementenmodul nach Anspruch 9, dadurch gekennzeichnet, daß der Zwischenzylinder (46) eine ringförmige Schulter mit einer Dicke $e$ entsprechend der Beziehung $0,1\emptyset<e<0,4\emptyset$ besitzt.

11. Trennelementenmodul nach einem der Ansprüche 8 bis 10, dadurch gekennzeichnet, daß der kleinste mit $\emptyset$ gekennzeichnete Außendurchmesser der Dichtung und ihre kleinste mit $d$ gekennzeichnete Dicke durch die Beziehung $0,05\emptyset<d<0,3\emptyset$ miteinander zusammenhängen.

12. Trennelementenmodul nach einem der Ansprüche 8 bis 11, dadurch gekennzeichnet, daß die Querabmessungen der Dichtungen (101, 102, 103) so bemessen sind, daß zwischen den Dichtungen an jedem Ende des Gehäuses eine freie Zone (120) besteht, die leicht durch Einleiten von Wasserdampf sterilisiert werden kann.

FIG.1

FIG. 2

FIG.3

FIG.4

FIG.5A

FIG.5B

EP 0 270 051 B1

FIG.6A

FIG.6B

FIG.6C

FIG.7

16

FIG.8

FIG.9

# FIG.10

# FIG.11A

# FIG.12A

# FIG.11B

# FIG.12B

19

# FIG.13A

# FIG.14A

# FIG.13B

# FIG.14B